# EUROPÄISCHE PATENTSCHRIFT

(11) **EP 3 772 956 B1**
(45) Veröffentlichungstag und Bekanntmachung des Hinweises auf die Patenterteilung: **19.11.2025**
(21) Anmeldenummer: 19716903.0
(22) Anmeldetag: 12.04.2019
(51) Int. Cl.: A01N 43/12, A01N 43/90, A01N 47/06, A01N 25/04, A01P 7/04

(54) **HOCHBELADENE FORMULIERUNGEN MIT INSEKTIZIDEN AUS DER KETOENOL-KLASSE ZUR VERWENDUNG BEI DRIP- UND DRENCH- APPLIKATIONEN**
HIGH-LOADING FORMULATIONS WITH INSECTICIDES IN THE KETOENOL CLASS FOR USE IN DRIP AND DRENCH APPLICATIONS
FORMULATIONS FORTEMENT CHARGÉES CONTENANT DES INSECTICIDES DE LA CLASSE CÉTOÉNOLS POUR UNE UTILISATION DANS DES APPLICATIONS D'ÉGOUTTAGE ET D'ASPERSION

(30) Priorität: 13.04.2018 EP 18167285
(43) Veröffentlichungstag der Anmeldung: 17.02.2021
(73) Patentinhaber: Bayer Aktiengesellschaft, 51373 Leverkusen (DE)
(72) Erfinder: PERIS, Gorka, 50737 Köln (DE); HAAS, Pierre, Philippe, 51375 Leverkusen (DE); HERRMANN, Stefan, 40764 Langenfeld (DE)
(74) Vertreter: BIP Patents
(86) Internationale Anmeldenummer: PCT/EP2019/059479
(87) Internationale Veröffentlichungsnummer: WO 2019/197637

(56) Entgegenhaltungen:
- EP-A1- 1 905 302
- EP-A1- 2 092 822
- WO-A1-2008/037379
- WO-A1-2009/007014
- WO-A1-2009/115262
- WO-A2-2005/084435
- WO-A2-2005/084441
- WO-A2-2006/089633
- AU-A1- 2017 202 401
- US-A1- 2017 166 546

## Beschreibung

Die vorliegende Erfindung betrifft lösemittelfreie wässrige Suspensionskonzentrate mit hoher Wirkstoffkonzentration, guter biologischer Wirksamkeit und guter rheologischer Stabilität. Die Erfindung ist in Anspruch 1 definiert. Die erfindungsgemäßen Formulierungen eignen sich für den Bereich des Pflanzenschutzes.

Wirkstoffe können prinzipiell auf viele verschiedene Arten formuliert werden, wobei die Eigenschaften der Wirkstoffe und Art der Formulierung Probleme hinsichtlich der Herstellbarkeit, Stabilität, Anwendbarkeit und Wirksamkeit der Formulierungen aufwerfen können. Außerdem sind bestimmte Formulierungen aus ökonomischen und ökologischen Gründen vorteilhafter als andere.

Formulierungen auf Wasserbasis haben in der Regel den Vorteil, dass sie einen geringen Anteil oder keinen Anteil an organischen Lösungsmitteln benötigen, wobei der Verzicht auf organische Lösemittel ökologische Vorteile bieten kann.

Andererseits besteht generell ein Bedarf an hochkonzentrierten Formulierungen von Wirkstoffen, weil die höhere Konzentration vielerlei Vorteile hat. Beispielsweise wird mit hochkonzentrierten Formulierungen ein geringerer Verpackungsaufwand nötig als mit niedrigkonzentrierten Formulierungen. Entsprechend reduziert sich der Aufwand für Herstellung, Transport (Menge und Frequenz) und Lagerung. Darüber hinaus vereinfacht sich z.B. die Zubereitung der in der Landwirtschaft eingesetzten Spritzbrühen durch die kleineren Mengen an beispielsweise Pflanzenschutzmittel, welche gehandhabt werden müssen, wie z.B. beim Abfüll- und Mischvorgang. Zudem sind wasserkonzentrierte Formulierungen meist nicht nur höher konzentriert als organische, lösemittelhaltige Formulierungen, sondern auch ökologisch gewünscht, da sie frei von Lösemitteln sind. Darüber hinaus bieten hochkonzentrierte Formulierungen einen ökonomischeren Umgang mit inerten oder Trägermaterialien der Formulierungen.

Gleichzeitig darf die erhöhte Beladung mit AI (active Ingredient / Wirkstoff) nicht zu einer Abnahme der technischen Stabilität der Formulierung führen.

Hochkonzentrierte Suspensionskonzentrate (SC) sind aus ökonomischer und ökologischer Sicht daher bevorzugt.

Jedoch lassen sich einige Stoffe, wie etwa Herbizid Safener, auf Grund ihres niedrigen und breiten Schmelzbereichs sowie ihrer amorphen Struktur nicht direkt in Wasser geben, so dass sie zunächst in organischen Lösemitteln gelöst bzw. formuliert werden müssen. Sie werden dann beispielsweise als organische Dispersionen, wässrige Emulsion, Suspoemulsion, Kapselsuspension oder als Emulsionskonzentrat formuliert, wobei der niedrig schmelzende Wirkstoff gelöst bzw. emulgiert vorliegt. Nachteilig ist hierbei, dass durch die Zugabe von organischen Lösemitteln keine wässrigen Dispersionen erhalten werden können, sondern sich wässrige Emulsionen oder Suspoemulsionen bilden, die deutlich instabiler in der Lagerung und meist auch niedriger konzentriert sind als reine wässrige Dispersionen. Bei der Weiterverarbeitung des Technischen Konzentrats zu einem wasserdispergierbarem Granulat bleiben bei den üblicherweise verwendeten Mineralölen als Lösemittel (wie beispielsweise Solvesso^{®} 200 ND von ExxonMobil) bis zu 20 Gew.-% im Endprodukt zurück.

Darüber hinaus kann die Verwendung agrochemischer Formulierungen zur Bodenapplikation in Fällen vorteilhaft sein, in denen es vorteilhaft ist, eine Exposition gegenüber Pflanzenschutzmitteln oberirdischer Pflanzenteile zu vermeiden oder Drift (Verwehung des Wirkstoffs) und Exposition nicht gewünschter Flächen sowie dort lebende Fauna und Flora zu vermeiden. Die Gründe hierfür können in einer unzureichenden Pflanzenverträglichkeit der Formulierung oder auch in der Inkompatibilitat mit anderen agrochemischen Produkten liegen.

Die Bodenapplikation durch Drip oder Drench ist inbesondere bei systemisch wirkenden Wirkstoffen vorteilhaft, da sich ihre Wirkung auch in Pflanzenteilen entfaltet, welche weit von der die Wirkstoffe aufnehmenden Wurzel entfernt sind.

Aus der WO 2006/089633 A2 sind flüssige Formulierungen bestimmter Ketoenol-Insektizide bekannt, die auf organischen Lösungsmitteln basieren und in Hydrokulturen gegen blattfressende und/oder blattsaugende Insekten angewendet werden können. Das in der WO 2006/089633 beschriebene Lösungsmittel Dimethylformamid ist jedoch als toxikologisch bedenklich einzuordnen und ist potentiell fortpflanzungsschädigend oder teratogen.

Weiterhin sind aus der WO 2009/115262 A1 wasserbasierte Dispersionen von Ketoenol-Insektiziden zur Bekämpfung von auf Blättern lebenden Insekten bekannt. Die beschriebenen Formulierungen besitzen eine maximale Beladung von 50 g/L (5%), wobei aus ökonomischen Gesichtspunkten eine höhere Beladung wünschenswert wäre. Die aus der WO 20097115262 A1 bekannten Formulierungen sind jedoch für höhere Beladungen ungeeignet.

EP 1 905 302 A1 offenbart ein lagerstabiles wässriges Suspensionskonzentrat enthaltend Spirotetramat, ein Polyalkoxytriglyzerid als Penetrationsförderer in Kombination mit einem Polyglyzerin als Adjuvans sowie Citronensäure, Xanthan, Glycerin, Tenside, Entschäumer und weitere Adjuvantien.

Aus US 2017/166546 A1 sind wässrige Suspensionskonzentrate von Spirodiclofen bekannt, die neben Natriumalkylnaphthalensulfonat als Dispergiermittel, Xanthan, Propylenglykol und ein Konservierungsmittel enthalten.

In der WO 2007/068428 A2 wird die Steigerung der Wirkung von Pflanzenschutzmitteln enthaltend Inhibitoren der Fettsäure-Biosynthese (beispielsweise phenylsubstituierte cyclische Ketoenole) durch die Zugabe von Ammoniumsalzen und/ oder Phosphoniumsalzen oder durch die Zugabe von Ammonium- bzw. Phosphoniumsalzen und Penetrationsförderern, die entsprechenden Mittel, Verfahren zu ihrer Herstellung und ihre Anwendung im Pflanzenschutz beschrieben.

Nachteilig an den aus dem Stand der Technik bekannten Formulierungen (ob Suspensionskonzentraten oder wasserdispergierbaren Granulaten) ist, dass hohe Mengen an für die Umwelt und den Anwender unerwünschten organischen Lösemitteln zur Lösung des Safeners verwendet werden müssen, während die Wirkstoffbeladung und biologische Wirkung unzureichend sind.

Es besteht somit nach wie vor Bedarf an neuen Formulierungen in Form von wässrigen Dispersionen (SC), die eine hohe Wirkstoffbeladung bei guter Umweltverträglichkeit (keine oder minimale Mengen organischer Lösungsmittel) und guter biologischer Wirkung sowie eine gute Bioverfügbarkeit der Wirkstoffe im Boden bzw. bei Bodenapplikation aufweisen.

Die Aufgabe der vorliegenden Erfindung bestand somit darin, wäßrige Dispersionen bestimmter Ketoenol-Insektizide bereitzustellen, die eine hohe Wirkstoffbeladung, gute Umweltverträglichkeit und gute biologische Wirkung aufweisen. Vorzugsweise sollten diese im Wesentlichen frei von organischen Lösungsmitteln sein.

Gegenstand der vorliegenden Erfindung sind somit wäßrige Wirkstoffdispersionenen (SC) mit den oben genannten Eigenschaften sowie ein Verfahren zur Herstellung wässriger, lösungsmittelfreier Formulierungen (Dispersionen) und deren Anwendung als Insektizid.

Ferner wurde überraschenderweise gefunden, daß die biologische Aktivität der erfindungsgemäßen wäßrigen Dispersionen mit steigendem pH-Wert verbessert werden kann.

Gegenstand der Erfindung sind deshalb insektizide Zusammensetzungen in Form hochkonzentrierter wässriger Suspensionskonzentrate enthaltend:
a. mindestens ein Ketoenol-Insektizid
b. mindestens ein Dispergiermittel, vorzugsweise ausgewählt aus der Gruppe der nicht-ionischen Dispergiermittel,
c. mindestens einen pH-Puffer,
d. Xanthan als Rheologie-Modifizierer,
e. mindestens ein Frostschutzmittel,
f. mindestens ein Biozid,
g. mindestens einen Entschäumer, und
h. optional weitere Wirkstoffe und Adjuvantien, und
i. Wasser,
   die dadurch gekennzeichnet sind, daß a) ein Tetramsäurederivat der Formel (I) ist 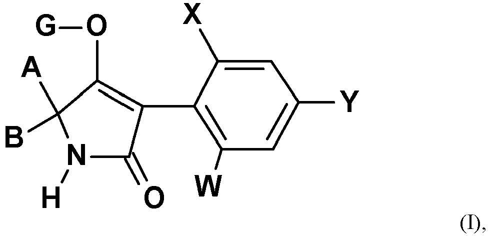 in welcher
      W und Y unabhängig voneinander für Wasserstoff, C1-C4-Alkyl, Chlor, Brom, Jod oder Fluor stehen,
      X für C1-C4-Alkyl, C1-C4-Alkoxy, Chlor, Brom oder Jod steht,
      A, B und das Kohlenstoffatom, an das sie gebunden sind, für C3-C6-Cycloalkyl stehen, welches durch eine gegebenenfalls durch C1-C4-Alkyl oder C₁-C₄-Alkoxy-C₁-C₂-alkyl-substituierte Alkylendioxyl-Gruppe substituiert ist, die mit dem Kohlenstoffatom, an das sie gebunden ist, ein 5-Ring- oder 6-Ringketal bildet,
      G für Wasserstoff (a) oder für eine der Gruppen 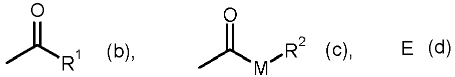 steht,
      in welchen
         - E: für ein Metallion oder ein Ammoniumion steht,
         - M: für Sauerstoff oder Schwefel steht,
         - R1: für geradkettigtes oder verzweigtes C1-C6-Alkyl steht,
         - R2: für geradkettigtes oder verzweigtes C1-C6-Alkyl steht,
   und wobei die Komponenten a) bis g) in den folgenden Konzentrationen vorliegen:
      a) 200-400 g/L
      b) 40-90 g/L
      c) 0.9-2.0 g/L
      d) 3-5 g/L
      e) 100-150 g/L
      f) 0.05-1.5 g/L
      g) 0.05-1.5 g/L.

In der vorliegenden Erfindung können in Formeln, z.B. Formel (I), gegebenenfalls substituierte Reste, sofern nichts anderes angegeben, einfach oder mehrfach substituiert sein, wobei bei Mehrfachsubstitutionen die Substituenten gleich oder verschieden sein können.

Ferner sind in den oben in der vorliegenden Erfindung genannten Vorzugsbereichen die verschiedenen Vorzugsebenen so zu verstehen, daß diese permutierend miteinander kombiniert werden können, in jedem Fall sind aber gleiche Vorzugsebenen und insbesondere die jeweils am meisten bevorzugte Ausführungsform / Vorzugsebene miteinander zu kombinieren und als solche Kombination auch offenbart.

Ebenso sollen Zusammensetzungen wie oben beschrieben als offenbart angesehen werden, die nur aus den essentiellen Komponenten (nicht optionalen Komponenten) bestehen.

Prozentzahlen sind - wenn nicht anders angegeben - als Gewichtsprozente zu verstehen, wobei sich die Gew-% der Zusammensetzungen zu 100 addieren.

Soweit nicht anders definiert, bedeutet basisch im Sinne der vorliegenden Erfindung ein pH-Wert in wäßriger Lösung von pH>7.

### a) Wirkstoff

In den erfindungsgemäßen Zusammensetzungen ist Komponente a) ein Tetramsäurederivat der Formel (I) 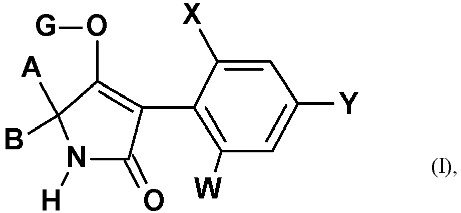 in welcher
- W und Y: unabhängig voneinander für Wasserstoff, C₁-C₄-Alkyl, Chlor, Brom, Jod oder Fluor stehen,
- X: für C₁-C₄-Alkyl, C₁-C₄-Alkoxy, Chlor, Brom oder Jod steht,
- A, B: und das Kohlenstoffatom, an das sie gebunden sind, für C₃-C₆-Cycloalkyl stehen, welches durch eine gegebenenfalls durch C₁-C₄-Alkyl oder C₁-C₄-Alkoxy-C₁-C₂-alkyl-substituierte Alkylendioxyl-Gruppe substituiert ist, die mit dem Kohlenstoffatom, an das sie gebunden ist, ein 5-Ring- oder 6-Ringketal bildet,
- G: für Wasserstoff (a) oder für eine der Gruppen steht, 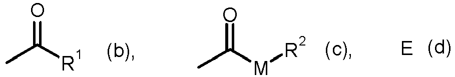 in welchen
- E: für ein Metallion oder ein Ammoniumion steht,
- M: für Sauerstoff oder Schwefel steht,
- R¹: für geradkettigtes oder verzweigtes C₁-C₆-Alkyl steht,
- R²: für geradkettigtes oder verzweigtes C₁-C₆-Alkyl steht.

Besonders bevorzugt einsetzbar sind Tetramsäurederivate der oben genannten Formel (I), in welcher die Reste die folgende Bedeutung haben:
- W: steht besonders bevorzugt für Methyl,
- X: steht besonders bevorzugt für Chlor oder Methyl, (besonders bevorzugt für Methyl),
- Y: steht besonders bevorzugt für Chlor, Brom oder Methyl,
- A, B: und das Kohlenstoffatom, an das sie gebunden sind, stehen besonders bevorzugt für gesättigtes C₆-Cycloalkyl, welches mit einer Alkylendioxyl-Gruppe substituiert ist, die mit dem Kohlenstoffatom, an das sie gebunden ist, ein 5-Ring- oder 6-Ringketal bildet,
- G: steht besonders bevorzugt für Wasserstoff (a) oder für eine der Gruppen 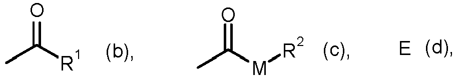 in welchen
- M: für Sauerstoff steht,
- E: für ein Metallionenäquivalent oder ein Ammoniumion steht, (insbesondere für Natrium oder Kalium)
- R¹: steht besonders bevorzugt für geradkettigtes oder verzweigtes C₁-C₄-Alkyl,
- R²: steht besonders bevorzugt für geradkettigtes oder verzweigtes C₁-C₄-Alkyl.

Ganz besonders bevorzugt einsetzbar sind Tetramsäurederivate der oben genannten Formel (I) mit G = Wasserstoff (a).

Ebenfalls ganz besonders bevorzugt einsetzbar sind Tetramsäurederivate der oben genannten Formel (I) mit G = E (d).

Insbesondere bevorzugt einsetzbar sind Tetramsäurederivate der oben genannten Formel (I), in welcher die Reste die folgende Bedeutung haben:

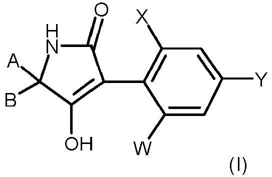

| **Bsp.-Nr.** | **W** | **X** | **Y** | **A** | **B** | **bekannt aus** WO 06/089633**; Bsp.-Nr.** |
|---|---|---|---|---|---|---|
| I-1 | CH₃ | CH₃ | CH₃ | 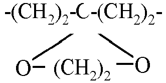 | | I-1-a-2 |
| I-2 | CH₃ | CH₃ | Cl | 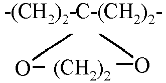 | | I-1-a-4 |
| I-3 | CH₃ | CH₃ | Br | 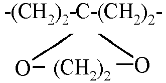 | | I-1-a-26 |
| I-4 | CH₃ | CH₃ | CH₃ | 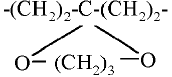 | | I-1-a-18 |
| I-5 | CH₃ | CH₃ | Cl | 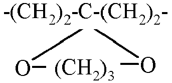 | | I-1-a-14 |
| I-6 | CH₃ | CH₃ | Br | 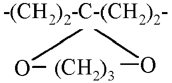 | | I-1-a-19 |

In einer besonders bevorzugten Ausführungsform ist Komponente a) eine Verbindung der Formel

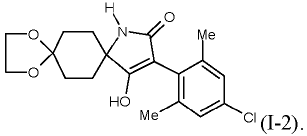

Die Verbindung I-2 wird bevorzugt in Form ihrer thermodynamisch stabilsten polymorphen Struktur eingesetzt. Diese Kristallstruktur sowie weitere physikalische Daten wurden wie folgt bestimmt:
Probenvorbereitung:
Die Verbindung I-2 (C₁₉H₂₂ClNO₄ / MW = 363.84 g/mol) wurde aus Methanol kristallisiert und bei Raumtemperatur getrocknet, wobei Modifikation A erhalten wurde.

Die Modifikation A von I-2 kann durch Röntgen-Pulver-Diffraktometrie auf Basis der entsprechenden Beugungsdiagramme charakterisiert werden, die bei 25°C und mit Cu-Kα 1 Strahlung (1.5406 Å) aufgenommen wurden.

Die Modifikation A gemäß der vorliegenden Erfindung zeigt mindestens 3, bevorzugt mindestens 5, weiter bevorzugt mindestens 7, noch weiter bevorzugt mindestens 10, und am meisten bevorzugt alle Reflexionen, wie sie in Tabelle 2a wiedergegeben werden:
Kristallographische Untersuchungen an Einkristallen der Modifikation A zeigten, daß die Kristallstruktur monoklin ist. Die Elementarzelle hat die Raumgruppe P2₁/c.

**Tabelle 1: Kristallographische Eigenschaften der Modifikation A**

| Parameter | *Modifikation A* |
|---|---|
| Kristallsystem | Monoklin |
| Raumgruppe | P2₁/c |
| a in Å | 11.66544(14) |
| b in Å | 9.50603(10) |
| c in Å | 16.66907(19) |
| α | 90 |
| β | 110.2045(13) |
| γ | 90 |
| Z | 4 |
| Dichte (berechnet) | 1.393 g/cm³ |

| | |
|---|---|
| a, b, c = Länge der Seiten der Elementarzelle α, β, γ = Winkel der Elementarzelle of the unit cell Z = Anzahl der Moleküle in der Elementarzelle | |

**Tabellen 2a/b: Kristallographische Daten / Reflexe[°2Theta] der Modifikation A**

| 2a | 2b |
|---|---|
| [°2Theta] | Reflexe [°2Theta] |
| Modifikation A | Modifikation A |
| 11,3 | 8,0 |
| 14,6 | 10,8 |
| 16,0 | 11,3 |
| 20,1 | 12,2 |
| 21,7 | 14,6 |
| 22,7 | 16,0 |
| 23,1 | 17,6 |
| 24,5 | 18,4 |
| 28,2 | 19,4 |
| 29,0 | 20,1 |
| | 21,7 |
| | 22,7 |
| | 23,1 |
| | 23,8 |
| | 24,5 |
| | 25,9 |
| | 26,4 |
| | 28,2 |
| | 29,0 |
| | 29,4 |
| | 30,1 |
| | 30,6 |
| | 32,2 |
| | 36,2 |
| | 37,4 |
| | 38,2 |
| | 39,1 |

Die polymorphe Form der Modifikation A von I-1 kann durch IR-Spektroskopie anhand des entsprechenden Spektrums bestimmt werden, das bei 25°C unter Verwendung eines Diamant-ATR Gerätes bei einer Auflösung von 4 cm⁻¹ aufgenommen wurde. Die Modifikation A der vorliegenden Erfindung zeigt mindestens 3, bevorzugt mindestens 5, weiter bevorzugt mindestens 7, und besonders bevorzugt alle Banden, wie sie in Tabelle 2c beschrieben sind.

**Tabelle 2c) IR-Banden [cm⁻¹]**

| Bandenmaxima [cm⁻¹] | Bandenmaxima [cm⁻¹] |
|---|---|
| Modifikation A | |
| 3378 | 1133 |
| 2969 | 1109 |
| 2955 | 1088 |
| 2943 | 1045 |
| 2924 | 1036 |
| 2876 | 1027 |
| 2858 | 1015 |
| 2326 | 997 |
| 1637 | 980 |
| 1592 | 965 |
| 1575 | 946 |
| 1564 | 936 |
| 1470 | 903 |
| 1444 | 869 |
| 1438 | 856 |
| 1428 | 821 |
| 1394 | 783 |
| 1372 | 769 |
| 1344 | 748 |
| 1325 | 704 |
| 1317 | 691 |
| 1297 | 659 |
| 1272 | 639 |
| 1247 | 625 |
| 1194 | 573 |
| 1157 | 563 |
| | 553 |

### b) Dispergiermittel

Geeignete anionische Dispergiermittel b1) wie Emulgatoren, Tenside, Netzmittel und Dispergatoren sind beispielweise Alkali-, Erdalkali- oder Ammoniumsalze von Sulfonaten, Sulfaten, Phosphaten, Carboxylaten und deren Mischungen wie z.B. die Salze der Alkylsulphonsäuren oder Alkylphosphorsäuren sowie Alkylarylsulphon- oder Alkylarylphosphorsäuren, Diphenylsulfonate, alpha-Olefinsulfonate, Ligninsulfonate, Sulfonate von Fettsäuren und Ölen, Sulfonate von ethoxylierten Alkylphenolen, Sulfonate von alkoxylierten Arylphenolen, Sulfonate von kondensierten Naphthalinen, Sulfonate von Dodecyl- und Tridecylbenzolen, Sulfonate von Naphthalinen und Alkylnaphthalinen, Sulfosuccinate oder Sulfosuccinamate. Beispiele für Sulfate sind Sulfate von Fettsäuren und Ölen, von ethoxylierten Alkylphenolen, von Alkoholen, von ethoxylierten Alkoholen oder von Fettsäureestern. Beispiele für Phosphate sind Phosphatester. Beispiele fur Carboxylate sind Alkylcarboxylate sowie carboxylierte Alkohol- oder Alkylphenolethoxylate. Ebenfalls geeignet ist die Gruppe der anionischen Emulgatoren der Alkalimetall-, Erdalkalimetall- und Ammoniumsalze der Polystyrolsulfonsäuren, Salze der Polyvinylsulphonsäuren, Salze der Alkylnaphthalinsulphonsäuren, Salze von Alkylnaphthalinsulphonsäure-Formaldehyd Kondensationsprodukte, Salze von Kondensationsprodukte der Naphthalinsulphonsäure, Phenolsulphonsäure und Formaldehyd. Beispiele sind Kalziumdodecylbenzensulfonat wie Rhodocal^{®} 70/B (Solvay), Phenylsulfonat CA100 (Clariant) oder Isopropylammoniumdodecylbenzenesulfonate wie Atlox^{®} 3300B (Croda).

Weitere typische Vertreter sind unter anderem Phenylsulfonat CA (Ca-Dodecylbenzolsulfonat), Soprophor^{®}-Typen (gegebenenfalls veresterte Derivate von Tristyrylphenol-Ethoxylaten), Emulsogen^{®} 3510 (alkyliertes EO/PO Copolymerisat), Emulsogen^{®} EL 400 (ethoxyliertes Ricinusöl), Tween^{®}-Typen (fettacylierte Sorbitan-Ethoxylate), Calsogen^{®} AR 100 (Ca-Dodecylbenzolsulfonat). Bevorzugt sind Kombinationen aus Salzen alkylierter aromatischer Sulfonsäuren, wie Phenylsulfonat Ca und/oder Calsogen^{®} AR 100, mit alkylierten Copolymerisaten aus Ethylen- und Propylenoxid, wie Emulsogen^{®} 3510. Besonders bevorzugt sind Kombinationen aus Salzen der Dodecylbenzolsulfonsäure, wie Calsogen^{®} AR 1 00 mit alkyliertem Copolymerisat aus Ethylen- und Propylenoxid, wie Emulsogen^{®} 3510.

Beispiele für weitere anionische Dispergiermittel b1) aus der Gruppe der Naphthalinsulfonate sind Galoryl^{®} MT 800 (Natrium-Dibutylnaphthalinsulfonsäure), Morwet^{®} IP (Natriumdiisopropylnaphthalinsulfonat) und Nekal^{®} BX (Alkylnaphthalinsulfonat). Beispiele für anionische Tenside aus der Gruppe der Kondensationsprodukte von Naphthalinsulfonaten mit Formaldehyd sind Galoryl^{®} DT 201 (Naphthalinsulfonsäure Hydroxypolymer mit Formaldeyd und Methylphenol Natriumsalz), Galoryl^{®} DT 250 (Kondensationsprodukt aus Phenol- und Naphthalinsulfonaten), Reserve^{®} C (Kondensationsprodukt aus Phenol- und Naphthalinsulfonaten) oder Morwet^{®} D-425, Tersperse^{®} 2020. Bevorzugt sind 1,2 mit Di-Butyl- oder Di-Isobutyl-substituierte Naphthalinsulfonate, wie z.B. Produkte wie Galoryl^{®} MT 800 (CFPI-Nufarm) und Nekal^{®} BX (BASF).

Weitere typische Tenside sind Soprophor^{®} 3D33, Soprophor^{®} 4D384, Soprophor^{®} BSU, Soprophor^{®} CY/8 (Solvay) und Hoe^{®} S3474 und in Form der Sapogenat^{®} T-Produkte (Clariant), beispielsweise Sapogenat^{®} T 100.

Als nichtionische Dispergiermittel b2) wie Emulgatoren, Netzmittel, Tenside und Dispergatoren kommen übliche, in Formulierungen von agrochemischen Wirkstoffen vorhandene oberfläche native Substanzen in Frage. Beispielhaft genannt seien ethoxylierte Nonylphenole, Umsetzungsprodukte von linearen oder verzweigten Alkoholen mit Ethylenoxid und/oder Propylenoxid, Ethylenoxid-Propylenoxid-Blockcopolymere, Endgruppen-verschlossene und nicht Endgruppen-verschlossene alkoxylierte lineare und verzweigte, gesättigte und ungesättigte Alkohole (z.B. Butoxypolyethylenpropylenglycole), Umsetzungsprodukte von Alkylphenolen mit Ethylenoxid und/oder Propylenoxid, Ethylenoxid-Propylenoxid-Blockcopolymere, Polyethylenglykole und Polypropylenglykole, weiterhin Fettsäureester, Fettsäurepolyglykoletherester, Alkylsulfonate, Alkylsulfate, Arylsulfate, ethoxylierte Arylalkylphenole, wie zum Beispiel Tristyryl-phenol-ethoxylat mit durchschnittlich 16 Ethylenoxid-Einheiten pro Molekül, weiterhin ethoxylierte und propoxylierte Arylalkylphenole sowie sulfatierte oder phosphatierte Arylalkylphenol-ethoxylate bzw. -ethoxy- und -propoxylate. Besonders bevorzugt sind Tristyryl-phenol-alkoxylate und Fettsäurepolyglykoletherester. Ganz besonders bevorzugt sind Tristyryl-phenolethoxylate, Tristyryl-phenol-ethoxy-propoxylate und Ricinusölpolyglykoletherestern, jeweils einzeln oder in Mischungen. Hinzu kommen gegebenenfalls Additive, wie Tenside oder Ester von Fettsäuren, die zur Verbesserung der biologischen Wirksamkeit beitragen. Geeignete nichtionische Emulgatoren b2) sind beispielsweise Soprophor^{®} 796/P, Lucramul^{®} CO30, Lucramul^{®} HOT, Lucramul^{®} PSI 100, Lucramul PS 29 oder Synperonic^{®} T304.

Geeignete nicht-ionische Dispergatoren b2) können ebenfalls ausgewählt werden aus der Gruppe enthaltend Polyvinylpyrrolidon (PVP), Polyvinylalkohol, Co-Polymer aus PVP und Dimethylaminoethylmethacrylat, butyliertes PVP, Co-Polymer aus Vinylchlorid und Vinylacetat, und partiell hydrolysiertem Vinylacetat, Phenolharze, modifizierte Cellulosetypen wie beispielsweise Luviskol^{®} (Polyvinylpyrrolidon), Mowiol^{®} (Polyvinylalkohol) oder modifizierte Cellulose. Bevorzugt sind Polyvinylpyrrolidon-Typen, besonders bevorzugt sind Typen von niedrigem Molekulargewicht wie Luviskol^{®} K30 oder Sokalan^{®} K30.

Als weitere nicht-ionische Emulgatoren b2) aus der Gruppe der Di- und Tri-block-copolymere aus Alkylenoxiden kommen z.B. Verbindungen in Frage, die auf Basis von Ethylen- und Propylenoxid aufgebaut sind, mit mittleren Molmassen zwischen 200 und 10000, bevorzugt 1000 bis 4000 g/mol, wobei der Massenanteil des polyethoxylierte Blocks zwischen 10 und 80% variiert, wie z.B. Synperonic^{®} PE-Reihe (Uniqema), Pluronic^{®} PE-Reihe (BASF), VOP^{®} 32- oder Genapol^{®} PF-Reihe (Clariant).

Besonders bevorzugt werden nicht-ionische Dispergiermittel verwendet, besonders bevorzugt nicht-ionische Dispergiermittel auf Basis von Tristyrylphenol-polyethylenglycolethern, z.B. Lucramul PS 29, und Polyethylenoxid modifizierten Poly(methyl methacrylat)-Methacrylsäuren, z.B. Atlox^{®} 4913.

### c) pH-Puffer

Als pH-Puffer kommen die handelsüblichen pH-Puffer in Betracht wie beispielsweise Citrat, Phosphat und Acetat. Bevorzugt werden pH-Puffer mit einem pH ≤ 7 verwendet (gemessen in wäßriger Lösung mit Wasserstoffelektrode).

Vorzugsweise werden pH-Puffer auf Citrat- und Phosphatbasis verwendet.

### d) Rheologie-Modifizierer

Als Rheologie-Modifizierer c) wird Xanthan verwendet. Typische Vertreter sind beispielsweise Rhodopol^{®} (Solvay) und Kelzan^{®} (Kelco Corp.) sowie Satiaxane^{®} (Cargill).

### e) Frostschutzmittel

Geeignete Frostschutzmittel sind solche aus der Gruppe der Harnstoffe, Diole und Polyole, wie Ethylenglycol und Propylenglycol, Glycerin, bevorzugt Propylenglycol oder Glycerin, besonders bevorzugt Glycerin.

### f) Biozide

Als Biozide werden vorzugsweise Biozide auf Basis von Isothiazolinonen verwendet, vorzugsweise ausgewählt aus der Gruppe, die aus Benzisothiazolinon, Chlormethylisothiazolinon, Methylisothiazolinon sowie Mischungen daraus besteht.

Besonders bevorzugt sind Biozide auf Basis von 1,2-Benzisothiazolin-3-on und Chlormethylisothiazolinon.

Geeignete Biozide sind z.B. Produkte wie Acticide^{®} MBS (Biozid, Thor Chemie), CIT, MIT oder BIT wie etwa Proxel^{®} GXL (BIT), Acticide^{®} SPX (MIT, CIT), Kathon CGI.

### g) Entschäumer

Geeignete Entschäumer sind oberflächenaktive Verbindungen auf Silikon- bzw. Silanbasis wie die Tegopren^{®}-Produkte (Goldschmidt), die SE^{®}-Produkte (Wacker), sowie die Bevaloid^{®}- (Kemira), Rhodorsil^{®}- (Solvay) und Silcolapse^{®}-Produkte (Blustar Silicones), bevorzugt sind SE^{®}- (Wacker), Rhodorsil^{®}-und Silcolapse^{®}-Produkte, besonders bevorzugt sind Entschäumer auf Silikonbasis, z.B. Produkte wie Silcolapse^{®} 5020.

### h) optional weitere Wirkstoffe und Adjuvantien

Die erfindungsgemäßen Zusammensetzungen enthalten gegebenenfalls weitere Formulierhilfsmittel (h), z.B. gegebenenfalls Stoffe aus den Gruppen der Antioxidantien, der Farbstoffe und/oder der inerten Füllmaterialien, Penetrationsförderer, sowie weitere, vorzugsweise insektizide, Wirkstoffe.

Als Antioxidantien kommen alle üblicherweise für diesen Zweck in agrochemischen Mitteln einsetzbaren Substanzen in Betracht. Bevorzugt ist Butylhydroxytoluol.

Als Farbstoffe kommen alle üblicherweise für diesen Zweck in agrochemischen Mitteln einsetzbaren Substanzen in Frage. Beispielhaft genannt seien Titandioxid, Farbruß, Zinkoxid und Blaupigmente sowie Permanentrot FGR.

Als Penetrationsförderer kommen im vorliegenden Zusammenhang z.B. Polyalkoxytriglyzeride in Betracht. Polyalkoxytriglyzeride können durch Alkoxylierung von Triglyzeriden hergestellt werden. Die Alkoxylierung von Triglyzeriden führt zu Stoffgemischen, wobei 1 bis 3 der Seitenketten alkoxyliert werden. Bei der Alkoxylierung kann man unterscheiden zwischen Ethoxylierung, Propoxylierung, Butoxylierung oder eine Mischung dieser Prozesse. Die Länge der unmodifizierten Seitenketten kann für jede der Seitenketten unabhängig von den anderen Seitenketten im selben Molekül variieren zwischen 9 und 24, bevorzugt zwischen 12 und 22, ganz bevorzugt zwischen 14 und 20 Kohlenstoffatomen. Diese aliphatische Seiteketten können gerade oder verzweigt vorliegen.

Weiterer insektizide Wirkstoff (f) sind vorzugsweise aus der Gruppe bestehend aus Imidacloprid, Nitenpyram, Acetamiprid, Thiacloprid, Thiamethoxam, Clothianidin, Cyantraniliprole, Chlorantraniliprole, Flubendiamid, Tetraniliprole, Cyclaniliprole; Spirodiclofen, Spiromesifen, Spirotetramat, Abamectin, Acrinathrin, Chlorfenapyr, Emamectin, Ethiprole, Fipronil, Flonicamid, Flupyradifuron, Indoxacarb, Metaflumizone, Methoxyfenozid, Milbemycin, Pyridaben, Pyridalyl, Silafluofen, Spinosad, Sulfoxaflor und Triflumuron ausgewählt; besonders bevorzugt aus der Gruppe bestehend aus Ethiprole und Flupyradifuron.

Der Anteil an Wirkstoff (Komponente a / Verbindungen der Formel I / I-2) in den erfindungsgemäßen Zusammensetzungen beträgt 200-400 g/L.

Der Anteil an Dispergiermittel (Komponente b) in den erfindungsgemäßen Zusammensetzungen beträgt 40 - 90 g/L.

Der Anteil an pH-Puffer (Komponente c) in den erfindungsgemäßen Zusammensetzungen beträgt 0.9 - 2 g/L.

Der Anteil Rheologie-Modifizierer (Komponente d) in den erfindungsgemäßen Zusammensetzungen beträgt 3 - 5 g/L.

Der Anteil an Frostschutzmittel (Komponente e) in den erfindungsgemäßen Zusammensetzungen beträgt 100 - 150 g/L.

Der Anteil an Biozid (Komponente f) in den erfindungsgemäßen Zusammensetzungen beträgt 0.05 - 1.5 g/L.

Der Anteil an Entschäumer (Komponente g) in den erfindungsgemäßen Zusammensetzungenbeträgt 0.05 - 1.5 g/L.

Der Anteil der weiteren Wirkstoffe und Adjuvantien (Komponente h) - sofern enthalten - in den erfindungsgemäßen Zusammensetzungen beträgt bevorzugt 0.01 - 5 g/L.

Wasser wird in den erfindungsgemäßen Formulierungen wie oben und auch unten weiter beschrieben zu jeweils 1 L aufgefüllt.

Bei den oben genannten Ausführungsformen sowie in allen in der vorliegenden Anmeldung genannten erfindungsgemäßen Zusammensetzungen beträgt der pH-Wert der wäßrigen Suspensionskonzentrate vorzugsweise 3 - 9, weiter bevorzugt 4 - 8, und besonders bevorzugt 5 bis 7.

In einer bevorzugten Ausführungsform enthält die erfindungsgemäße insektizide Zusammensetzung:
a. Verbindungen der Formel (I) 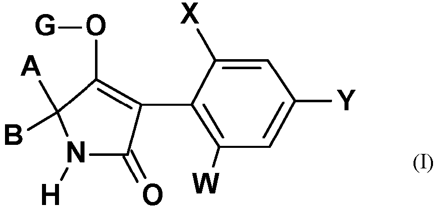 wobei
   - W: für Methyl steht,
   - X: für Chlor oder Methyl steht,
   - Y: für Chlor, Brom oder Methyl steht,
   - A, B: und das Kohlenstoffatom, an das sie gebunden sind, für gesättigtes C6-Cycloalkyl stehen, welches mit einer Alkylendioxyl-Gruppe substituiert ist, die mit dem Kohlenstoffatom, an das sie gebunden ist, ein 5-Ring- oder 6-Ringketal bildet,
   - G: für Wasserstoff (a) oder für eine der Gruppen steht, 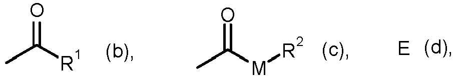 in welchen
   - M: für Sauerstoff steht,
   - E: für ein Metallionenäquivalent oder ein Ammoniumion steht,
   - R¹: für geradkettigtes oder verzweigtes C₁-C₄-Alkyl steht,
   - R²: für geradkettigtes oder verzweigtes C₁-C₄-Alkyl steht,
b. mindestens ein nicht-ionisches Dispergiermittel, ausgewählt aus der Gruppe bestehend aus Tristyrylphenol-alkoxylaten und Fettsäurepolyglykoletherestern,
c. mindestens einen pH-Puffer, ausgewählt aus der Gruppe bestehend aus pH-Puffern auf Citrat- und Phosphatbasis,
d. Xanthan als Rheologie-Modifizierer,
e. mindestens ein Frostschutzmittel, ausgewählt aus der Gruppe bestehend aus Harnstoffen, Diolen und Polyolen,
f. mindestens ein Biozid aus der Gruppe der Isothiazolinone,
g. mindestens einen Entschäumer aus der Gruppe der Entschäumer auf Silikon- oder Silanbasis,
h. optional weitere Wirkstoffe und Adjuvantien.

In einer weiter bevorzugten Ausführungsform enthält die erfindungsgemäße insektizide Zusammensetzung:
a. eine Verbindung der Formel (I) ausgewählt aus den folgenden Verbindungen

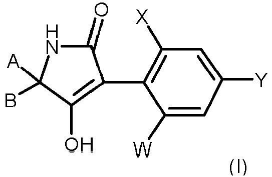

| **W** | **X** | **Y** | **A** | **B** |
|---|---|---|---|---|
| CH₃ | CH₃ | CH₃ | 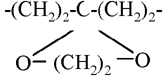 | |
| CH₃ | CH₃ | Cl | 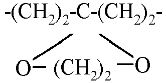 | |
| CH₃ | CH₃ | Br | 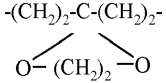 | |
| CH₃ | CH₃ | CH₃ | 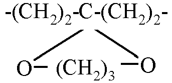 | |
| CH₃ | CH₃ | Cl | 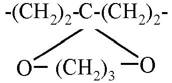 | |
| CH₃ | CH₃ | Br | 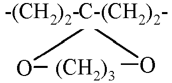 | |

b. mindestens ein nicht-ionisches Dispergiermittel, ausgewählt aus der Gruppe der Tristyrylphenol-alkoxylate,
c. mindestens einen pH-Puffer, ausgewählt aus der Gruppe bestehend aus pH-Puffern auf Citrat- und Phosphatbasis,
d. Xanthan als Rheologie-Modifizierer,
e. mindestens ein Frostschutzmittel, ausgewählt aus der Gruppe bestehend aus Diolen und Polyolen,
f. mindestens ein Biozid aus der Gruppe bestehend aus Benzisothiazolinon, Chlormethylisothiazolinon und Methylisothiazolinon,
g. mindestens einen Entschäumer aus der Gruppe der Entschäumer auf Silikonbasis,
h. optional weitere Wirkstoffe und Adjuvantien.

In einer besonders bevorzugten Ausführungsform enthält die erfindungsgemäße insektizide Zusammensetzung:
a. die Verbindung der Formel (I-2) mit folgender Struktur: 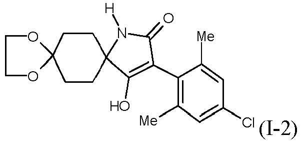
b. mindestens ein nicht-ionisches Dispergiermittel, ausgewählt aus der Gruppe der Tristyrylphenol-alkoxylate,
c. mindestens einen pH-Puffer, ausgewählt aus der Gruppe bestehend aus pH-Puffern auf Citrat- und Phosphatbasis,
d. Xanthan als Rheologie-Modifizierer
e. mindestens ein Frostschutzmittel, ausgewählt aus der Gruppe bestehend aus Ethylenglycol, Propylenglycol, und Glycerin, bevorzugt Propylenglycol und Glycerin, und besonders bevorzugt Glycerin,
f. Benzisothiazolinon als Biozid,
g. mindestens einen Entschäumer aus der Gruppe der Entschäumer auf Silikonbasis,
h. optional weitere Wirkstoffe und Adjuvantien.

Die Aufwandmenge an den erfindungsgemäßen Formulierungen kann innerhalb eines größeren Bereiches variiert werden. Sie richtet sich nach den jeweiligen Wirkstoffen und nach deren Gehalt in den Zusammensetzungen.

Mit Hilfe der erfindungsgemäßen Zusammensetzungen lassen sich die insektiziden Wirkstoffmischungen in besonders vorteilhafter Weise auf Pflanzen und/oder deren Lebensraum ausbringen.

Mit den erfindungsgemäßen Zusammensetzungen können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Bevorzugt werden die Verbindungen der Formel (I oder II) nach Angießen (Drench), Dip, oder durch Drip-Applikation gegen tierische Schädlinge aus den folgenden Schädlingsfamilien eingesetzt:
Bevorzugt sind aus der Familie der Blasenläuse (Pemphigidae): Eriosoma spp., Pemphigus spp., in Kulturen wie z.B. Zitrus, Kernobst, Steinobst, Blattgemüse, Wurzel- und Knollengemüse und Zierpflanzen.

Bevorzugt sind aus der Familie der Wurzelläuse (Phylloxeridae): Phylloxera spp. in Wein, Nüssen, Zitrus.

Bevorzugt sind aus der Familie der Blattflöhe (Psyllidae): Psylla spp., Paratrioza spp., Tenalaphara spp., Diaphorina spp., Trioza spp., in Kulturen wie z.B. Kernobst, Steinobst, Zitrus, Gemüse, Kartoffeln, in tropischen Kulturen.

Bevorzugt sind aus der Familie der Napfschildläuse (Coccidae): Ceroplastes spp., Drosicha spp. Pulvinaria spp., Protopulminaria spp., Saissetia spp., Coccus spp., in mehrjährigen Kulturen wie z.B. Zitrus, Kernobst, Steinobst, Oliven, Wein, Kaffee, Tee, tropischen Kulturen, Zierpflanzen, Gemüse.

Bevorzugt sind aus der Familie der Deckelschildläuse (Diaspididae): Quadraspidiotus spp., Aonidiella spp., Lepidosaphes spp., Aspidiotus spp., Aspis spp., Diaspis spp., Parlatoria spp., Pseudaulacaspis spp., Unaspis spp., Pinnaspis spp., Selenaspidus spp., in Kulturen wie z.B. Zitrus, Kernobst, Steinobst, Mandeln, Pistazien, Nüssen, Oliven, Tee, Zierpflanzen, Wein, tropischen Kulturen.

Bevorzugt sind aus der Familie der Röhrenschildläuse (Ortheziidae): Orthezia spp. in Zitrus, Kernobst, Steinobst.

Bevorzugt sind aus der Familie der Schmier- und Wollläuse (Pseudococcidae): Pericerga, Pseudococcus spp., Planococcus spp., Dysmicoccus spp., in Kulturen wie z.B. Zitrus, Stein- und Kernobst, Tee, Wein, Gemüse, Zierpflanzen und tropischen Kulturen.

Weiterhin bevorzugt sind aus der Familie der Mottenschildläuse (Aleyrodidae): Bemisia tabaci, Bemisia argentifolii, Trialeurodes vaporariorum, Aleurothrixus floccosus, Aleurodes spp., Dialeurodes spp., Parabemisia myricae in Kulturen wie z.B. Gemüse, Melonen, Kartoffeln, Tabak, Beerenfrüchten, Zitrus, Zierpflanzen, Baumwolle, Soja und tropischen Kulturen.

Außerdem bevorzugt sind aus der Familie der Röhrenläuse (Aphidae):
Myzus spp. in Tabak, Steinobst, Beerenfrüchten, Fruchtgemüse, Blattgemüse, Knollen- und Wurzelgemüse, Melonen, Kartoffeln, Zierpflanzen, Gewürze,

Acyrthosiphon onobrychis in Gemüse,
Aphis spp. in Tabak, Zitrus, Kernobst, Steinobst, Melonen, Erdbeeren, Beerenfrüchten, Fruchtgemüse, Blattgemüse, Knollen-, Stangen- und Wurzelgemüse, Zierpflanzen, Kartoffeln, Kürbisse, Gewürze,
Rhodobium porosum in Erdbeeren,
Nasonovia ribisnigri in Blattgemüse,
Macrosiphum spp. in Zierpflanzen, Kartoffeln, Blatt-, und Fruchtgemüse, Erdbeeren,
Phorodon humuli in Hopfen,
Brevicoryne brassicae in Blattgemüse,
Toxoptera spp.in Zitrus, Steinobst, Mandeln, Nüssen, Gewürzen,
Aulacorthum spp. in Zitrus, Kartoffeln, Frucht- und Blattgemüse,
Anuraphis cardui in Gemüse,
Brachycaudus helycrisii in Sonnenblumen,
Acyrthosiphon onobrychis in Gemüse.

Bevorzugt sind ebenfalls aus der Familie der Thripse (Thripidae): Anaphothrips spp., Baliothrips spp., Caliothrips spp., Frankliniella spp., Heliothrips spp., Hercinothrips spp., Rhipiphorothrips spp., Scirtothrips spp., Kakothrips spp., Selenothrips spp. und Thrips spp., in Kulturen wie z.B. Obst, Baumwolle, Wein, Tee, Nüsse, tropischen Kulturen, Zierpflanzen, Coniferen, Tabak, Gewürze, Gemüse, Beerenfrüchte, Melonen, Zitrus und Kartoffeln.

Bevorzugt sind außerdem aus den Familien der Minierfliegen (Agromyzidae) und Blumenfliegen (Anthomyiidae): Agromyza spp., Amauromyza spp., Atherigona spp., Chlorops spp., Liriomyza spp., Oscinella spp., Pegomyia spp. in Kulturen wie z.B. Gemüse, Melonen, Kartoffeln, Nüsse, Zierpflanzen.

Bevorzugt sind aus den Familien der Zwergzikaden (Cicadellidae) und Hornzikaden (Delphacidae); Circulifer spp., Dalbus spp., Empoasca spp., Erythroneura spp., Homalodisca spp., Iodioscopus spp., Laodelphax spp., Nephotettix spp., Nilaparvata spp., Oncometopia spp., Sogatella spp., in Kulturen wie z.B. Zitrus, Obst, Wein, Kartoffeln, Gemüse, Zierpflanzen, Coniferen, Melonen, Beerenfrüchte, Tee, Nüssen, Reis und tropischen Kulturen.

Bevorzugt sind aus der Familie der Miniermotten (Gracillariidae):
Caloptilia spp., Gracillaria spp., Lithocolletis spp., Leucoptera spp., Phtorimaea spp., Phyllocnistis spp. in Kulturen wie Kernobst, Steinobst, Wein, Nüsse, Zitrus, Koniferen, Kartoffeln, Kaffee.

Bevorzugt sind aus der Familie der Gallmücken (Cecodomyiidae):
Contarinia spp., Dasineura spp., Diplosis spp., Prodiplosis spp., Thecodiplosis spp., Sitodiplosis spp., Haplodiplosis spp. in Kulturen wie Zitrus, Kernobst, Steinobst, Gemüse, Kartoffeln, Gewürze, Beerenobst, Koniferen, Hopfen.

Ebenso bevorzugt sind aus der Familie der Fruchtfliegen (Tephritidae):
Anastrepha spp., Ceratitis spp., Dacus spp., Rhagoletis spp. in Kulturen wie Gemüse, Beerenfrüchte, Melonen, Kern- und Steinobst, Zierpflanzen, Kartoffeln, Wein, tropischen Kulturen, Zitrus, Oliven.

Außerdem bevorzugt sind Milben aus den Familien der Spinnmilben (Tetranychidae) und der Gallmilben (Eriophydae):
Tetranychus spp., Panonychus spp., Aculops spp. in Kulturen wie Gemüse, Kartoffeln, Zierpflanzen, Zitrus, Wein, Koniferen.

Die erfindungsgemäße Behandlung der Pflanzen und Pflanzenteile mit den erfindungsgemäßen Zusammensetzungen erfolgt direkt oder durch Einwirkung auf deren Umgebung, Lebensraum oder Lagerraum nach den üblichen Behandlungsmethoden, z.B. durch Angießen (Drench), Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

Die Applikation des Wirkstoffs erfolgt vorzugsweise durch Angiessen auf den Boden. Alternativ erfolgt die Applikation des Wirkstoffes durch Tröpfchenapplikation (Drip) oder durch Dip-Applikation.

Vorzugsweise ist die zu behandelnde Pflanze ausgewählt aus der Gruppe bestehend aus Baumwolle, Sojabohne, Tabak, Gemüsen, Gewürzen, Zierpflanzen, Koniferen, Zitruspflanzen, Obst, tropischen Kulturen, Nüssen und Wein.

Vorzugsweise wirkt die erfindungsgemäße Zusammensetzung gegen Schädlinge aus den Familien der Blasenläuse, Wurzelläuse, Blattflöhe, Napfschildläuse, Deckelschildläuse, Röhrenschildläuse, Schmierläuse, Wollläuse, Mottenschildläuse, Röhrenläuse, Thripse, Zwergzikaden, Hornzikaden, Minierfliegen, Gallmücken, Fruchtfliegen, Miniermotten, Spinnmilben, Gallmilben.

Die Herstellung der erfindungsgemäßen Suspensionskonzentrate erfolgt in der Weise, dass man die Komponenten in den jeweils gewünschten Verhältnissen miteinander vermischt. Die Reihenfolge, in der die Bestandteile miteinander vermengt werden. ist beliebig. Zweckmäßigerweise setzt man die festen Komponenten in feingemahlenem Zustand ein. Es ist aber auch möglich, die nach dem Vermengen der Bestandteile entstehende Suspension zunächst einer Grob- und dann einer Feinmahlung zu unterziehen, so dass die mittlere Teilchengröße unterhalb von 20 µm liegt. Bevorzugt sind Suspensionskonzentrate, in denen die festen Partikel eine mittlere Teilchengröße zwischen 1 und 10 µm aufweisen (Bestimmung durch Laserbeugung, z.b. mit Malvern Mastersizer 2000 oder 3000, wobei die Probe im pH 4 Puffer verdünnt wird, bis die Dispersion eine geeignete Trübung erreicht. Die Daten werden anhand der Fraunhofer Beugung, bzw. der Mie-Theorie bearbeitet.).

Die Temperaturen können bei der Durchführung des erfindungsgemäßen Verfahrens in einem bestimmten Bereich variiert werden. Man arbeitet im allgemeinen bei Temperaturen zwischen 10°C und 60°C, vorzugsweise zwischen 15°C und 40°C.

Zur Durchführung des erfindungsgemäßen Verfahrens kommen übliche Misch- und Mahlgeräte in Betracht, die zur Herstellung von agrochemischen Formulierungen eingesetzt werden.

Im erfindungsgemäßen Verfahren hat das Wasser bevorzugt eine Temperatur zwischen 0°C und 40 °C, bevorzugt zwischen 5°C und 20°C.

Ebenfalls Gegenstand der vorliegenden Erfindung sind wasserdispergierbare Suspensionskonzentrate (SC) erhältlich nach dem erfindungsgemäßen Verfahren.

Das Vermahlen kann nach denen im Stand der Technik bekannten Verfahren erfolgen, z.B. durch Nassvermahlung der Komponenten in Perlmühlen (wie z.B. diskontinuierliche Perlmühlen, oder kontinuierliche Perlmühlen), oder Kolloidmühlen (wie z.B. Zahnkolloidmühlen).

Mit den erfindungsgemäßen Suspensionskonzentraten kann bei gleicher Aufwandmenge eine bessere biologische Wirkung und bioverfügbarkeit bei Bodenapplikation erzielt werden. Vorteilhafterweise zeigen die erfindungsgemäßen Suspensionskonzentrate eine ausgezeichnete Pflanzenverträglichkeit sowie eine reduzierte Neigung, phytotoxische Schäden zu verursachen.

Die erfindungsgemäßen Suspensionskonzentrate zeigen überraschenderweise hervorragende dispergierende und stabilisierende Eigenschaften nach dem weiteren Verdünnen mit Flüssigkeiten, bevorzugt Wasser, bei verbesserte biologischer Aktivität.

Daneben ergeben die Suspensionskonzentrate Langzeit-lagerstabile und anwendungstechnisch einwandfreie Formulierungen mit verbesserten rheologischen Eigenschaften.

Die Erfindung wird durch die Beispiele näher erläutert, ohne sie dadurch einzuschränken.

### Beispiele:

### Verwendete Einsatzstoffe:

Die in den nachfolgenden Beispielen verwendeten Begriffe haben folgende Bedeutung:

| | |
|---|---|
| Citronensäure | mehrbasige organische Säure |
| Rhodopol^{®} 23 | Xanthan Derivat (Solvay) |
| Silfoam^{®} SRE | Silikon-Entschäumer (Wacker) |
| SAG 1572 | Silikon-Entschäumer (Momentive) |
| Glycerin | Frostschutzmittel |
| Proxel^{®} GXL | Konservierungsmittel (Biozid, Proxel) |
| Kathon CG/ICP | Konservierungsmittel (Biozid, Rohm and Haas) |
| Lucramul PS29 | Tristyrylphenolethoxylat (Dispergiermittel, Levaco) |
| Lucramul PS54 | Tristyrylphenolethoxylat (Dispergiermittel, Levaco) |
| Atlox 4913 | Ethoxylat-Polymethacrylat-Pfropfcopolymer (Dispergiermittel, Croda) |

### Herstellungsbeispiele

Zur Herstellung eines Suspensionskonzentrates werden erst alle flüssigen Komponenten miteinander vermischt. Im nächsten Schritt werden die Feststoffe zugegeben und so lange gerührt, bis eine homogene Suspension entsteht. Die homogene Suspension wird zunächst einer Grob- und dann einer Feinmahlung unterworfen, so dass man eine Suspension enthält, in der 90% der Feststoffpartikel eine Teilchengröße unterhalb von 5 µm aufweisen. Anschließend fügt man unter Rühren bei Raumtemperatur den Verdicker, Vorlösung, Frostschutzmittel und Wasser hinzu. Es wird ein homogenes Suspensionskonzentrat erhalten.

Die folgenden Beispiele erläutern die Erfindung, ohne sie in irgendeiner Weise zu limitieren. Alle Angaben sind in g/L.

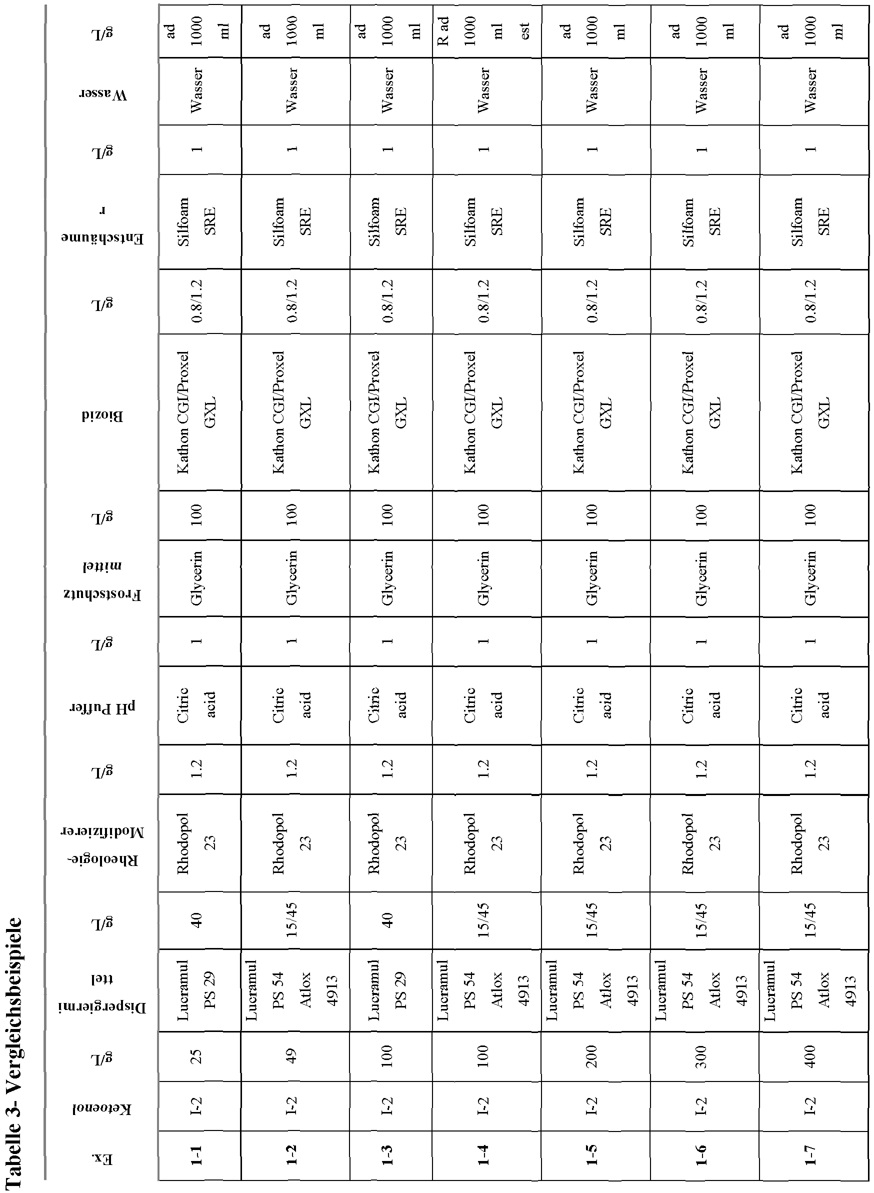

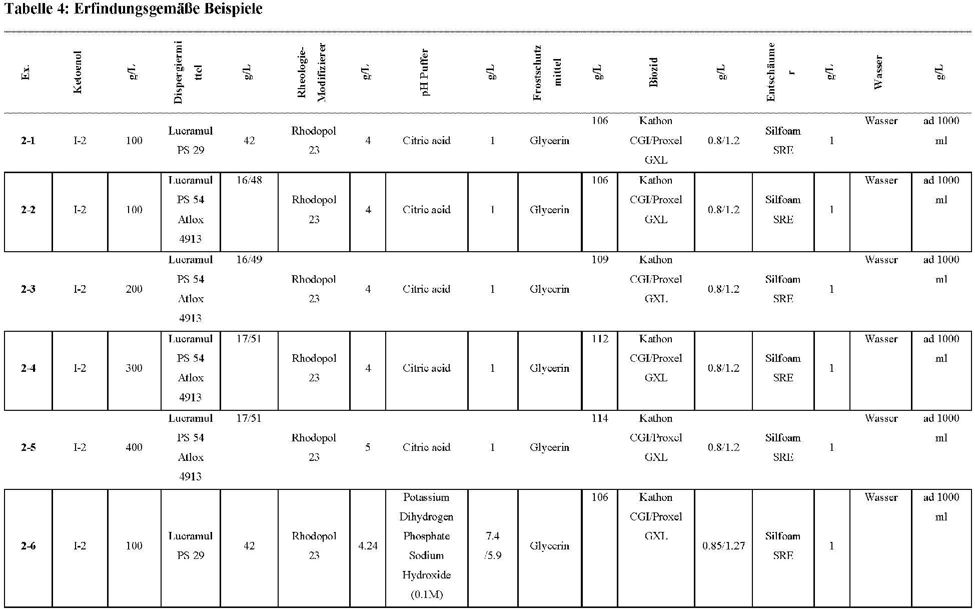

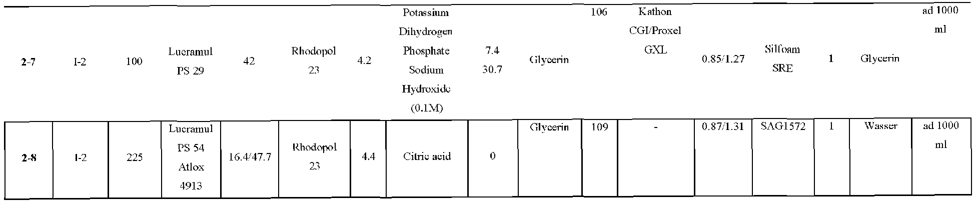

**Tabelle 5: Rheologische Eigenschaften**

| **(Vergleichs-)Beispiel** | **Elastic Modulus (Pa) @ Strain (Measured @0.1 Hz)** | **Phase Angle(°) @ Strain (Measured @0.1 Hz)** | **Yield Stress (Pa)** | **Dynamic Viscosity @ Yield Strass (Pa*s)** |
|---|---|---|---|---|
| **1-1 (Vergleich)** | 0.3 Pa @ 0.1 | 50° | 0.1 | 0.5 |
| **1-2 (Vergleich)** | 0.3 Pa @0.5 | 50° | 0.1 | 0.4 |
| **1-3 (Vergleich)** | 0.6 Pa @0.1 | 45° | 0.1 | 0.5 |
| **1-4 (Vergleich)** | 0.6 Pa @0.1 | 45° | 0.1 | 0.5 |
| **1-5 (Vergleich)** | 1 Pa @0.1 | 40° | 0.1 | 1 |
| **1-6 (Vergleich)** | 5 Pa @0.01 | 30° | 0.02 | 10 |
| **1-7 (Vergleich)** | 12 Pa @0.002 | 15° | 0.05 | 50 |
| 2-1 | 8 Pa @0.2 | 25° | 2 | 12 |
| **2-2** | 5 Pa @0.1 | 25° | 1 | 10 |
| **2-3** | 15 Pa @0.1 | 25° | 2 | 13 |
| **2-4** | 35 Pa @0.005 | 20° | 3 | 30 |
| **2-5** | 80 Pa @0.003 | 15° | 0.2 | 400 |
| **2-6** | 8 Pa @3 | 20° | 3 | 29 |
| **2-7** | 8 Pa @3 | 20° | 3 | 30 |
| **2-8** | 8 @0.1 | 25° | 3 | 20 |

Wie Tabelle 5 zeigt, weisen die erfindungsgemäßen Formulierungen verbesserte rheologische Eigenschaften mit einer geringeren Neigung zum Sedimentieren und Verklumpen. Dieses ergibt sich sowohl aus dem größeren Elastizitätsmodul der erfindungsgemäßen Formulierungen wie auch dem kleineren Phasenwinkel.

Dementsprechend weisen die Erfindungsgemäßen Formulierungen eine höhere Fließspannung und eine höherer dynamische Viskosität an der Fließgrenze auf als die aus dem Stand der Technik bekannten Formulierungen.

### Technische Characterisierung und Lagerstabilität

Die Dispersionenen verlieren ihre rheologischen Eigenschaften nicht bei Lagerung über 2W@RT/30°C/54°C (Tabelle 2)

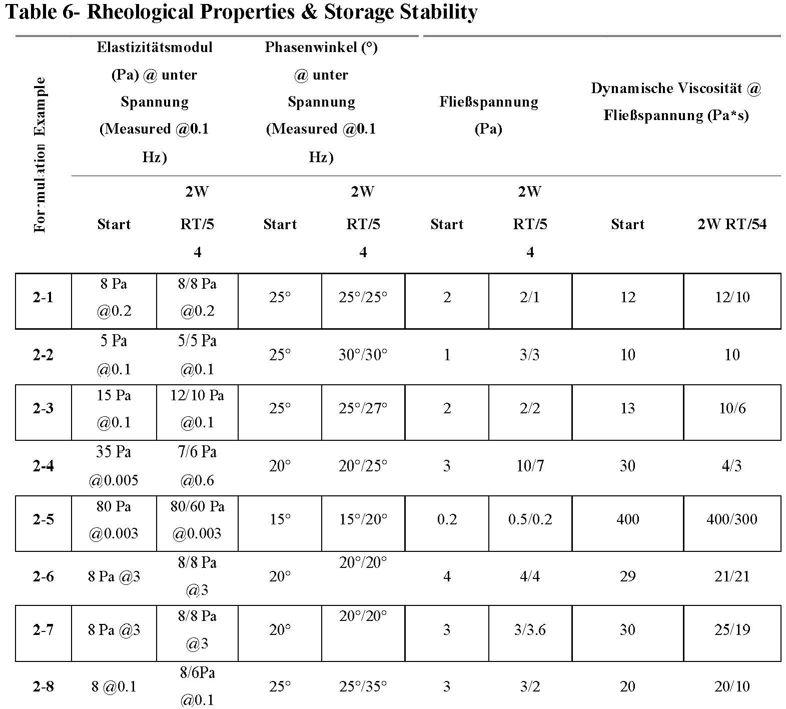

Weiterhin verliert das repräsentative Formulierungsbeispiel 2-8 nicht seine technischen Eigenschaften (AI-Konzentration, Partikelgröße, Synerese) nach Lagerung (Tabelle 7)

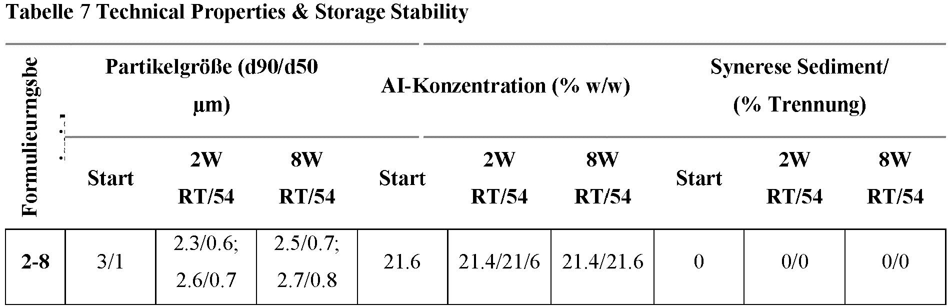

Soweit nicht anders definiert bedeuten W Wochen und T Tage im Rahmen der vorliegenden Erfindung.

### Biologische Aktivität nach Drip-Applikation

**Drip-Applikation im Gewächshaustest:** Baumwollpflanzen werden in Blumentöpfe mit 1L sandiger Lehmerde (58.5% Sand, 12.9% Ton, 28.5% Lehm, 1.6% Humus, pH 6.8) ausgepflanzt. Nach 7 Tagen wird 1mg des Wirkstoffs in der angegebenen Formulierung in 60 mL Wasser über einen Zeitraum von 15 min über einen Erdspieß ca. 1cm vom Stamm der Pflanze in die Topferde getropft. Die Pflanzen werden bei 25 °C und ausreichender Beleuchtung im Gewächshaus gehalten. Nach weiteren sieben Tagen (in denen nach Bedarf gewässert wird, ohne dass Wasser aus dem Topf austritt) wird mit einer gemischten Population von *Aphis gossypii* infiziert. 7 Tage nach der Infektion wird die Mortalität (tote Tiere im Vergleich zu einem vollwirksamen Standard und zur unbehandelten Kontrolle) ausgewertet.

**Drench-Applikation im Gewächshaustest:** Baumwollpflanzen werden in Blumentöpfe mit 1L sandiger Lehmerde (58.5% Sand, 12.9% Ton, 28.5% Lehm, 1.6% Humus, pH 6.8) ausgepflanzt. Nach 7 Tagen wird 2mg des Wirkstoffs in der angegebenen Formulierung in 60 mL auf einmal rund um den Stamm in die Topferde gegossen. Die Pflanzen werden bei 25 °C und ausreichender Beleuchtung im Gewächshaus gehalten. Nach weiteren sieben Tagen (in denen nach Bedarf gewässert wird, ohne dass Wasser aus dem Topf austritt) wird mit einer gemischten Population von *Aphis gossypii* infiziert. 7 Tage nach der Infektion wird die Mortalität (tote Tiere im Vergleich zu einem vollwirksamen Standard und zur unbehandelten Kontrolle) ausgewertet.

**Tabelle 8**

| **Applikationsmethode** | **Formulierungsbeispiel** | **Konzentration AI** | **pH Sprühlösung** | **Biologische Kontrolle** |
|---|---|---|---|---|
| **Drip** | 2-8 | 1 mg AI/L Soil | pH 5 | 55% |
| | | | pH 7 | 65% |
| **Drench** | 2-8 | 2 mg AI/L Soil | pH 5 | 85% |
| | | | pH 7 | 93% |

### Prüf- und Lagerverfahren:

Alle Tests wurden nach dem im Pflanzenschutz üblichen CIPAC Methoden durchgeführt (CIPAC = Collaborative International Pesticides Analytical Council; www.cipac.org). Die Langzeitlagerung wurde nach CIPAC MT 46.3 bei 2 Wochen Raum Temperatur/54°C Lagerungszeit durchgeführt. Die nachfolgend verwendeten Begriffe haben folgende Bedeutung. Wenn nicht anders angegeben wird 1% in Wasser (CIPAC D, 342 ppm Wasserhärte) bei 23°C getestet.
- 0T = Prüfergebnis nach Null Tagen Lagerung;
- 2W RT/54 = Prüfergebnis des beschleunigten Lagerungstest (2 Wochen Raum Temperatur/54°C) zur Überprüfung der Langzeitstabilität eines Formulierungsprodukts;
- D90/50 = Wirkstoff-Partikelgröße (Laserstreuung 90%/50% aller Volumenpartikel);
- D90/50 2WRT/54 = Wirkstoff-Partikelgröße nach Lagerungstest (2 Wochen Raum Temperatur/54°C); Eine Erhöhung der Werte deutet auf Kristallwachstum hin, wobei eine Erhöhung um den Faktor 2 meist noch akzeptabel ist; mehr als ein Faktor 4 unakzeptabel ist;
- Sediment = Werte > 10% kennzeichnen starke Bodensatz-Bildung.

## Patentansprüche

1. Zusammensetzung enthaltend:
a. mindestens ein Ketoenol-Insektizid,
b. mindestens ein Dispergiermittel, vorzugsweise ausgewählt aus der Gruppe der nicht-ionischen Dispergiermittel,
c. mindestens einen pH-Puffer,
d. Xanthan als Rheologie-Modifizierer,
e. mindestens ein Frostschutzmittel,
f. mindestens ein Biozid,
g. mindestens einen Entschäumer, und
h. optional weitere Wirkstoffe und Adjuvantien, und
i. Wasser,
**dadurch gekennzeichnet, daß** a) ein Tetramsäurederivat der Formel (I) ist 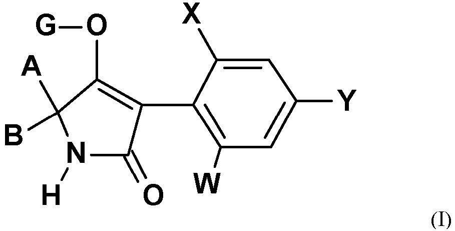 in welcher
W und Y unabhängig voneinander für Wasserstoff, C1-C4-Alkyl, Chlor, Brom, Jod oder Fluor stehen,
X für C1-C4-Alkyl, C1-C4-Alkoxy, Chlor, Brom oder Jod steht,
A, B und das Kohlenstoffatom, an das sie gebunden sind, für C3-C6-Cycloalkyl stehen, welches durch eine gegebenenfalls durch C1-C4-Alkyl oder C₁-C₄-Alkoxy-C₁-C₂-alkyl-substituierte Alkylendioxyl-Gruppe substituiert ist, die mit dem Kohlenstoffatom, an das sie gebunden ist, ein 5-Ring- oder 6-Ringketal bildet,
G für Wasserstoff (a) oder für eine der Gruppen 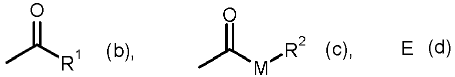 steht, in welchen
E für ein Metallion oder ein Ammoniumion steht,
M für Sauerstoff oder Schwefel steht,
R1 für geradkettigtes oder verzweigtes C1-C6-Alkyl steht,
R2 für geradkettigtes oder verzweigtes C1-C6-Alkyl steht, und
wobei die Komponenten a) bis g) vorliegen in
a) 200-400 g/L
b) 40-90 g/L
c) 0.9-2.0 g/L
d) 3-5 g/L
e) 100-150 g/L
f) 0.05-1.5 g/L
g) 0.05-1.5 g/L

2. Zusammensetzung nach Anspruch 1, **dadurch gekennzeichnet, daß** Komponente a) in den erfindungsgemäßen Zusammensetzungen eine Verbindung der Formel (I) 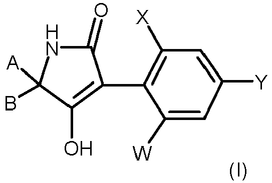 mit
| **W** | **X** | **Y** | **A** | **B** |
|---|---|---|---|---|
| CH₃ | CH₃ | CH₃ | 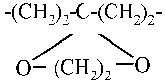 | |
| CH₃ | CH₃ | Cl | 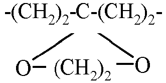 | |
| CH₃ | CH₃ | Br | 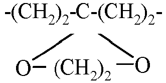 | |
| CH₃ | CH₃ | CH₃ | 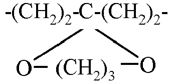 | |
| CH₃ | CH₃ | Cl | 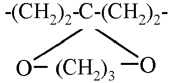 | |
| CH₃ | CH₃ | Br | 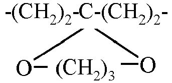 | |
ist.

3. Zusammensetzung nach einem oder mehreren der vorhergehenden Ansprüche, **dadurch gekennzeichnet, daß** Komponente a) eine Verbindung der Formel (I-2) 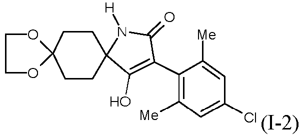 ist.

4. Zusammensetzung nach einem oder mehreren der vorhergehenden Ansprüche, **dadurch gekennzeichnet, daß** Komponente b) ein nicht-ionisches Dispergiermittel auf Basis von Tristyrylphenol-polyethylenglycolethern ist.

5. Zusammensetzung nach einem der vorhergehenden Ansprüche, **dadurch gekennzeichnet, daß** Komponente c) ein pH-Puffer auf Citrat- oder Phosphatbasis ist.

6. Zusammensetzung nach einem einem oder mehreren der vorhergehenden Ansprüche, **dadurch gekennzeichnet, daß** Komponente e) ein Frostschutzmittel ausgewählt aus der Gruppe bestehend aus Harnstoffen, Diolen und Polyolen ist.

7. Zusammensetzung nach einem einem oder mehreren der vorhergehenden Ansprüche, **dadurch gekennzeichnet, daß** Komponente f) ein Biozid ausgewählt aus der Gruppe der Isothiazolinone ist.

8. Zusammensetzung nach einem einem oder mehreren der vorhergehenden Ansprüche, **dadurch gekennzeichnet, daß** Komponente g) ein Entschäumer auf Silikonbasis ist.

9. Zusammensetzung nach Anspruch 1 enthaltend
a. Verbindungen der Formel (I) 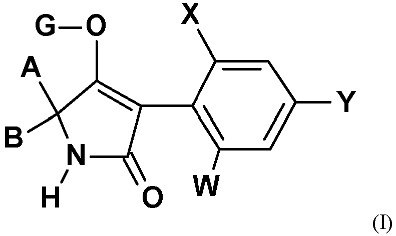 wobei die Verbindungen der Formel (I) folgende Definitionen haben:
W steht für Methyl,
X steht für Chlor oder Methyl,
Y steht für Chlor, Brom oder Methyl,
A, B und das Kohlenstoffatom, an das sie gebunden sind, stehen für gesättigtes C6-Cycloalkyl, welches mit einer Alkylendioxyl-Gruppe substituiert ist, die mit dem Kohlenstoffatom, an das sie gebunden ist, ein 5-Ring- oder 6-Ringketal bildet,
G steht für Wasserstoff (a) oder für eine der Gruppen 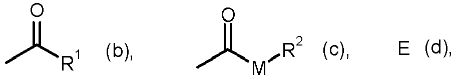 in welchen
M für Sauerstoff steht,
E für ein Metallionenäquivalent oder ein Ammoniumion steht,
R¹ für geradkettigtes oder verzweigtes C₁-C₄-Alkyl steht,
R² für geradkettigtes oder verzweigtes C₁-C₄-Alkyl steht.
b. mindestens ein nicht-ionisches Dispergiermittel, ausgewählt aus der Gruppe bestehend aus Tristyrylphenol-alkoxylaten und Fettsäurepolyglykoletherestern,
c. mindestens einen pH-Puffer, ausgewählt aus der Gruppe bestehend aus pH-Puffern auf Citrat- und Phosphatbasis,
d. Xanthan als Rheologie-Modifizierer,
e. mindestens ein Frostschutzmittel, ausgewählt aus der Gruppe bestehend aus Harnstoffen, Diolen und Polyolen,
f. mindestens ein Biozid aus der Gruppe der Isothiazolinone,
g. mindestens einen Entschäumer aus der Gruppe der Entschäumer auf Silikon- oder Silanbasis,
h. optional weitere Wirkstoffe und Adjuvantien.

10. Zusammensetzung nach einem oder mehreren der Ansprüche 1-9 enthaltend
a. die Verbindung der Formel (I-2) mit folgender Struktur: 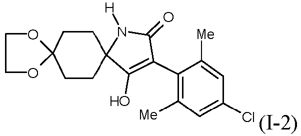
b. mindestens ein nicht-ionisches Dispergiermittel, ausgewählt aus der Gruppe der Tristyrylphenol-alkoxylate,
c. mindestens einen pH-Puffer, ausgewählt aus der Gruppe bestehend aus pH-Puffern auf Citrat- und Phosphatbasis,
d. Xanthan als Rheologie-Modifizierer,
e. mindestens ein Frostschutzmittel, ausgewählt aus der Gruppe bestehend aus Ethylenglycol und Propylenglycol, Glycerin, bevorzugt Propylenglycol oder Glycerin, besonders bevorzugt Glycerin,
f. mindestens ein Biozid aus der Gruppe, die aus Benzisothiazolinon besteht,
g. mindestens einen Entschäumer aus der Gruppe der Entschäumer auf Silikonbasis,
h. optional weitere Wirkstoffe und Adjuvantien.

11. Mittel, **gekennzeichnet durch** einen Gehalt an einer Zusammensetzung gemäß einem oder mehreren der Ansprüche 1 bis 10.

12. Nicht-therapeutische Verwendung einer Zusammensetzung gemäß einem oder mehreren der Ansprüche 1 bis 10 zur Bekämpfung von Insekten.

## Claims

1. Composition comprising:
a. at least one ketoenol insecticide,
b. at least one dispersant, preferably selected from the group of the nonionic dispersants,
c. at least one pH buffer,
d. xanthan as rheology modifier,
e. at least one antifreeze,
f. at least one biocide,
g. at least one defoamer, and
h. optionally further active ingredients and adjuvants, and
i. water,
**characterized in that** a) is a tetramic acid derivative of the formula (I) 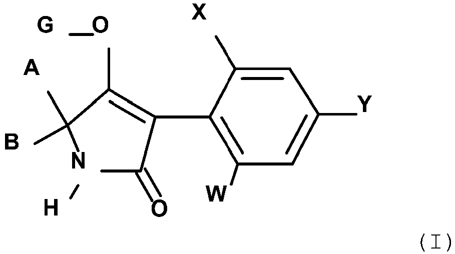
in which
W and Y are independently hydrogen, C1-C4-alkyl, chlorine, bromine, iodine or fluorine,
X is C1-C4-alkyl, C1-C4-alkoxy, chlorine, bromine or iodine,
A, B and the carbon atom to which they are bonded are C3-C6-cycloalkyl substituted by an optionally C1-C4-alkyl- or C₁-C₄-alkoxy-C₁-C₂-alkyl-substituted alkylenedioxy group that forms a 5-membered or 6-membered ketal together with the carbon atom to which it is bonded,
G is hydrogen (a) or is one of the groups 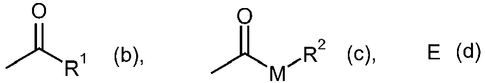
in which
E is a metal ion or an ammonium ion,
M is oxygen or sulfur,
R1 is straight-chain or branched C1-C6-alkyl,
R2 is straight-chain or branched C1-C6-alkyl, and
where components a) to g) are present as follows:
a) 200-400 g/L
b) 40-90 g/L
c) 0.9-2.0 g/L
d) 3-5 g/L
e) 100-150 g/L
f) 0.05-1.5 g/L
g) 0.05-1.5 g/L

2. Composition according to Claim 1, **characterized in that** component a) in the compositions according to the invention is a compound of the formula (I) 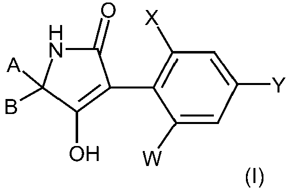 with
| W | X | Y | A | B |
|---|---|---|---|---|
| CH₃ | CH₃ | CH₃ | 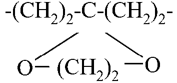 | |
| CH₃ | CH₃ | Cl | 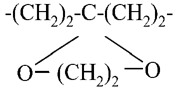 | |
| CH₃ | CH₃ | Br | 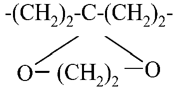 | |
| CH₃ | CH₃ | CH₃ | 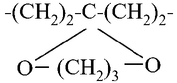 | |
| CH₃ | CH₃ | Cl | 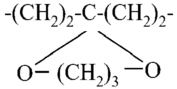 | |
| CH₃ | CH₃ | Br | 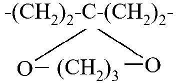 | |

3. Composition according to one or more of the preceding claims, **characterized in that** component a) is a compound of the formula (I-2)

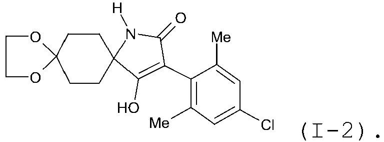

4. Composition according to one or more of the preceding claims, **characterized in that** component b) is a nonionic dispersant based on tristyrylphenol polyethylene glycol ethers.

5. Composition according to any of the preceding claims, **characterized in that** component c) is a citrate- or phosphate-based pH buffer.

6. Composition according to one or more of the preceding claims, **characterized in that** component e) is an antifreeze selected from the group consisting of ureas, diols and polyols.

7. Composition according to one or more of the preceding claims, **characterized in that** component f) is a biocide selected from the group of the isothiazolinones.

8. Composition according to one or more of the preceding claims, **characterized in that** component g) is a silicone-based defoamer.

9. Composition according to Claim 1, comprising
a. compounds of the formula (I) 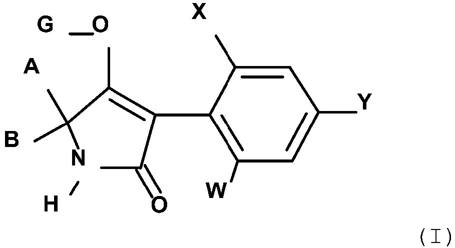 where the compounds of the formula (I) have the following definitions:
W is methyl,
X is chlorine or methyl,
Y is chlorine, bromine or methyl,
A, B and the carbon atom to which they are bonded are saturated C6-cycloalkyl substituted by an alkylenedioxy group that forms a 5-membered or 6-membered ketal together with the carbon atom to which it is bonded,
G is hydrogen (a) or is one of the groups 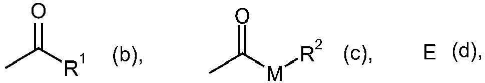 in which
M is oxygen,
E is one metal ion equivalent or an ammonium ion,
R¹ is straight-chain or branched C₁-C₄-alkyl,
R² is straight-chain or branched C₁-C₄-alkyl,
b. at least one nonionic dispersant selected from the group consisting of tristyrylphenol alkoxylates and fatty acid polyglycol ether esters,
c. at least one pH buffer selected from the group consisting of citrate- and phosphate-based pH buffers,
d. xanthan as rheology modifier,
e. at least one antifreeze selected from the group consisting of ureas, diols and polyols,
f. at least one biocide from the group of isothiazolinones,
g. at least one defoamer from the group of the silicone- or silane-based defoamers,
h. optionally further active ingredients and adjuvants.

10. Composition according to one or more of Claims 1 to 9, comprising
a. the compound of the formula (I-2) having the following structure: 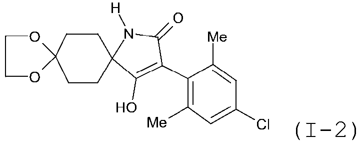
b. at least one nonionic dispersant selected from the group of the tristyrylphenol alkoxylates,
c. at least one pH buffer selected from the group consisting of citrate- and phosphate-based pH buffers,
d. xanthan as rheology modifier,
e. at least one antifreeze selected from the group consisting of ethylene glycol and propylene glycol, glycerol, preferably propylene glycol or glycerol, more preferably glycerol,
f. at least one biocide from the group consisting of benzisothiazolinone,
g. at least one defoamer from the group of the silicone-based defoamers,
h. optionally further active ingredients and adjuvants.

11. Product **characterized by** a content of a composition according to one or more of Claims 1 to 10.

12. Non-therapeutic use of a composition according to one or more of Claims 1 to 10 for controlling insects.

## Revendications

1. Composition contenant :
a. au moins un insecticide à base de céto-énol,
b. au moins un agent dispersant, choisi de préférence dans le groupe des agents dispersants non ioniques,
c. au moins un tampon pH,
d. du xanthane en tant que modificateur de rhéologie,
e. au moins un antigel,
f. au moins un biocide,
g. au moins un agent anti-moussant, et
h. en option d'autres principes actifs et adjuvants, et
i. de l'eau
**caractérisée en ce que** a) est un dérivé d'acide tétramique de la formule (I) 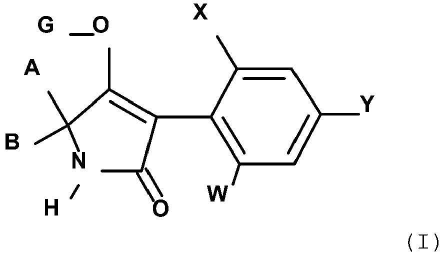
dans laquelle
W et Y représentent, indépendamment l'un de l'autre, de l'hydrogène, de l'alkyle en C1-C4, du chlore, du brome, de l'iode ou du fluor,
X représente de l'alkyle en C1-C4, de l'alcoxy en C1-C4, du chlore, du brome ou de l'iode,
A, B et l'atome de carbone, auquel ils sont liés, représentent du cycloalkyle en C3-C6, lequel est substitué par un groupe alkylène dioxyl éventuellement substitué par de l'alkyle en C1-C4 ou de alcoxy en C₁-C₄-alkyle en C₁-C₂, qui forme avec l'atome de carbone, auquel il est lié, un cétal à 5 noyaux ou à 6 noyaux,
G représente de l'hydrogène (a) ou un des groupes 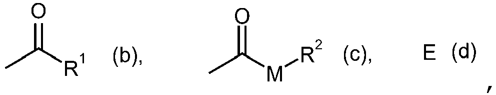
dans lesquels
E représente un ion métallique ou un ion d'ammonium,
M représente de l'oxygène ou du soufre,
R1 représente de l'alkyle en C1-C6 à chaîne droite ou ramifié,
R2 représente de l'alkyle en C1-C6 à chaîne droite ou ramifié, et
les composants a) à g) étant présents dans les quantités suivantes
a) 200 - 400 g/l
b) 40 - 90 g/l
c) 0,9 - 2,0 g/l
d) 3 - 5 g/l
e) 100 - 150 g/l
f) 0,05 - 1,5 g/l
g) 0,05 - 1,5 g/l

2. Composition selon la revendication 1, **caractérisée en ce que** le composant a) dans les compositions selon l'invention est un composé de la formule (I) 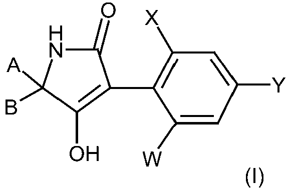 avec
| W | X | Y | A | B |
|---|---|---|---|---|
| CH₃ | CH₃ | CH₃ | 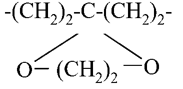 | |
| CH₃ | CH₃ | Cl | 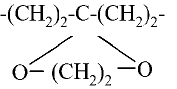 | |
| CH₃ | CH₃ | Br | 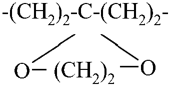 | |
| CH₃ | CH₃ | CH₃ | 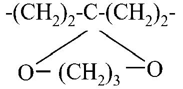 | |
| CH₃ | CH₃ | Cl | 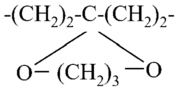 | |
| CH₃ | CH₃ | Br | 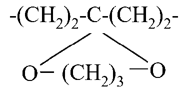 | |

3. Composition selon l'une ou plusieurs des revendications précédentes, **caractérisée en ce que** le composant a) est un composé de la formule (I-2)

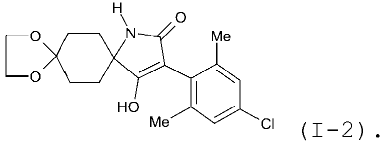

4. Composition selon l'une ou plusieurs des revendications précédentes, **caractérisée en ce que** le composant b) est un agent dispersant non ionique à base d'éthers de polyéthylèneglycol de tristyrylphénol.

5. Composition selon l'une des revendications précédentes, **caractérisée en ce que** le composant c) est un tampon pH à base de citrate ou de phosphate.

6. Composition selon l'une ou plusieurs des revendications précédentes, **caractérisée en ce que** le composant e) est un antigel choisi dans le groupe comprenant des urées, des diols et des polyols.

7. Composition selon l'une ou plusieurs des revendications précédentes, **caractérisée en ce que** le composant f) est un biocide choisi dans le groupe comprenant des isothiazolinones.

8. Composition selon l'une ou plusieurs des revendications précédentes, **caractérisée en ce que** le composant g) est un agent antimoussant à base de silicone.

9. Composition selon la revendication 1 contenant
a. des composés de la formule (I) 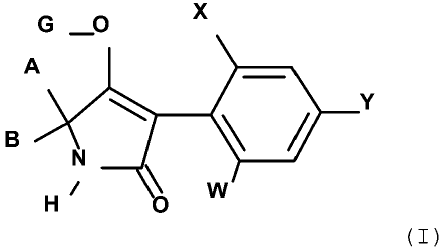 les composés de la formule (I) ayant des définitions suivantes :
W représente du méthyle,
X représente du chlore ou du méthyle,
Y représente du chlore, du brome ou du méthyle,
A, B et l'atome de carbone, auquel ils sont liés, représentent un cycloalkyle en C6 saturé, lequel est substitué par un groupe alkylène dioxyl, qui forme avec l'atome de carbone, auquel il est lié, un cétal à 5 noyaux ou à 6 noyaux,
G représente de l'hydrogène (a) ou un des groupes 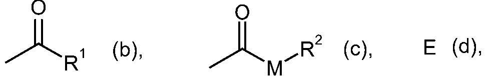
dans lesquels
M représente de l'oxygène,
E représente un équivalent d'ion métallique ou un ion d'ammonium,
R¹ représente de l'alkyle en C₁-C₄ à chaîne droite ou ramifié ;
R² représente de l'alkyle en C₁-C₄ à chaîne droite ou ramifié,
b. au moins un agent dispersant non ionique choisi dans le groupe comprenant des alcoxylates de tristyrylphénol et des esters de polyglycoléther d'acide gras,
c. au moins un tampon pH choisi dans le groupe comprenant des tampons pH à base de citrate et de phosphate,
d. du xanthane en tant que modificateur de rhéologie,
e. au moins un antigel, choisi dans le groupe comprenant des urées, des diols et des polyols,
f. au moins un biocide issu du groupe des isothiazolinones,
g. au moins un agent antimoussant issu du groupe des agents antimoussants à base de silicone ou de silane,
h. en option d'autres principes actifs et adjuvants.

10. Composition selon l'une ou plusieurs des revendications 1-9 contenant
a. le composé de la formule (I-2) avec une structure suivante : 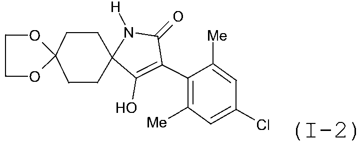
b. au moins un agent dispersant non ionique choisi dans le groupe des alcoxylates de tristyrylphénol,
c. au moins un tampon pH choisi dans le groupe comprenant des tampons pH à base de citrate et de phosphate,
d. du xanthane en tant que modificateur de rhéologie,
e. au moins un antigel choisi dans le groupe comprenant de l'éhylèneglycol et du propylèneglycol, de la glycérine, de manière préférée du propylèneglycol ou de la glycérine, de manière particulièrement préférée de la glycérine,
f. au moins un biocide issu du groupe, qui comprend de la benzisothiazolinone,
g. au moins un agent antimoussant issu du groupe des agents antimoussants à base de silicone,
h. en option d'autres principes actifs et adjuvants.

11. Agent, **caractérisé par** une teneur en une composition selon l'une ou plusieurs des revendications 1 à 10.

12. Utilisation non thérapeutique d'une composition selon l'une ou plusieurs des revendications 1 à 10 pour lutter contre des insectes.
